# EUROPEAN PATENT APPLICATION

(11) **EP 2 957 899 A1**
(43) Date of publication of application: **23.12.2015**
(21) Application number: 13875301.7
(22) Date of filing: 18.12.2013
(51) Int. Cl.: G01N 21/65

(54) **MEASURING DEVICE AND MEASURING METHOD**

(30) Priority: 13.02.2013 JP 2013025323
(71) Applicant: Sony Corporation, Tokyo 108-0075 (JP)
(72) Inventor: TAMADA, Sakuya, Tokyo 108-0075 (JP); NAKAO, Isamu, Tokyo 108-0075 (JP); KISHIMOTO, Takuya, Tokyo 108-0075 (JP); IKESHITA, Kazuki, Tokyo 108-0075 (JP)
(74) Representative: D Young & Co LLP
(86) International application number: PCT/JP2013/083953
(87) International publication number: WO 2014/125729

(57) **Abstract**

Provided is a measuring apparatus including: a light source unit to emit pulsed laser light used for pump light and Stokes light that excite a molecular vibration of a sample; a Stokes light generating unit to modulate an intensity of the pulsed laser light and to generate Stokes light using the pulsed laser light having the modulated intensity; a time delaying unit to delay the pump light using the pulsed laser light or the Stokes light; a detecting unit to detect, by lock-in detection, light transmitted through the sample irradiated with the pump light and the Stokes light having a controlled time delay amount, or reflected light from the sample; and an arithmetic processing device to perform arithmetic processing on the basis of anti-Stokes light detected by the lock-in detection while controlling the intensity modulation and the time delay amount.

## Description

### Technical Field

The present invention relates to a measuring apparatus and a measuring method.

### Background Art

A vibration spectral region that is important in considering application of vibrational spectroscopy is in the range of from 300 cm⁻¹ to 3600 cm⁻¹ that is known as a molecular fingerprint region. As a method for measuring a vibration spectrum corresponding to the region having these wavenumbers, an infrared spectroscopic method and a Raman spectroscopic method are representative methods, and by using both measurement methods, complementary information relating to molecular vibration of a sample can be obtained. Here, in the case of a sample such as a biological sample that contains water as a main ingredient, a vibration spectrum caused by water is observed in the infrared spectroscopic method, and thus the Raman spectroscopic method is mostly used.

However, in analysis, examination, and diagnosis of a biological material, a Raman spectrum of the biological material generally includes many vibration spectra of molecular function groups and is accompanied by autofluorescence of the biological material, and thus the spectrum is broadened in a complicated manner and there are often difficulties in attribution of the functional groups. Furthermore, optical damage of the biological material relatively easily occurs by the light used for the observation of vibration spectra, and therefore detection with high sensitivity has been demanded in order to suppress such optical damage.

As non-linear Raman spectroscopic methods which are one kind of the Raman spectroscopic method, there are a coherent anti-Stokes Raman scattering (Coherent Anti-Stokes Raman Scattering, CARS) spectroscopic method and a stimulated Raman scattering (Stimulated Raman Scattering, SRS) spectroscopic method. Since the non-linear Raman spectroscopic methods described above have superiority in avoidance of autofluorescence of a sample, high sensitivity, and three-dimensional spatial resolution, application of the methods to biological microscopes and medical image diagnostic devices has been remarkably developed.

For example, in the following Non-Patent literature 1, a non-resonant background is eliminated in the CARS spectroscopic method, and the FM-CARS spectroscopic method is disclosed as a method of enabling acquiring high-contrast images. This FM-CARS spectroscopic method focuses on the fact that the non-resonant background such as a response due to electronic polarization not relevant to molecular vibration is almost constant and is not dependent on wavelengths of pump light and Stokes light. This method uses the fact that signals that are extracted by lock-in detection with respect to FM modulation of Stokes light substantially correspond to differential spectra of molecular vibration from which the non-resonant background is eliminated.

Here, light sources used for the non-linear Raman spectroscopic methods have been large-scale and expensive, including mode synchronous ultrashort pulsed lasers using laser crystals of Ti: Sapphire, Nd: YVO₄, and the like, or optical parametric oscillators that can continuously change the wavelength using such laser light sources as excitation light sources.

With respect to these light sources, in recent years, fiber-type ultrashort pulsed lasers have been developed and becoming available, the lasers using optical fibers to which Er, Yb, and the like are doped. Further, by these light sources exciting highly nonlinear optical fibers typified by a photonic crystal fiber, continuous white light (supercontinuum light) can be generated relatively easily, and is used as Stokes light in the CARS spectroscopic method. A large number of such research reports have been published.

The following Patent Literature 1, for example, discloses a light source that generates an optical soliton in a fiber and uses the phenomenon of optical soliton self-frequency shift (Soliton Self-Frequency Shift) so as to be able to control the center wavelength of the optical soliton by the light intensity of an excitation light source. Further, the following Non-Patent Literature 2 proposes a CARS spectroscopic method using such a fundamental soliton (optical soliton) as Stokes light.

In a CARS spectroscopic method using the above supercontinuum light as Stokes light, as a technique of increasing the spectral resolution, the following Non-Patent Literature 3 proposes a technique of making the chirp rates (Δω/Δτ) of pump light and Stokes light equal to each other. Further, as a technique of simplifying the above technique of increasing the spectral resolution, the following Non-Patent Literature 4 discloses a technique of using a normal dispersion medium (optical glass block).

### Citation List

### Patent Literature

Patent Literature 1: JP 4066120B

### Non-Patent Literature

Non-Patent Literature 1: F. Ganikhanov, C. Evans, G. Saar, S. Xie, Opt. Lett. Vol. 31, 2006, p. 1872
Non-Patent Literature 2: E. R. Andresen, V. Birkedal, J. Thoegersen, S. R. Keiding, "Tunable light source for coherent anti-Stokes Raman scattering microspectroscopy based on the soliton self-frequency shift", OPTICS LETTERS, Vol. 31, 2006, p. 1328
Non-Patent Literature 3: T. Hellerer, A. M. K. Enejder, and A. Zumbusch, "Spectral focusing: High spectral resolution spectroscopy with broad-bandwidth laser pulses", APPLIED PHYSICS LETTERS Vol. 85, 2004, p. 25
Non-Patent Literature 4: I. Rocha-Mendoza, W. Langbein, and Borri, "Coherent anti-Stokes Raman microspectroscopy using spectral focusing with glass dispersion", APPLIED PHYSICS LETTERS Vol. 93, 2008, p. 201103
Non-Patent Literature 5: J. Zhao, M. M. Carrabba, F. S. Allen, "Automated Fluorescence Rejection Using Shifted Excitation Raman Difference Spectroscopy", Applied Spectroscopy, Vol. 56, 2002, p. 834
Non-Patent Literature 6: S. T. McCain, R. M. Willett, D. J. Brady, "Multi-excitation Raman spectroscopy technique for fluorescence rejection", Optics Express, Vol. 16, 2008, p. 10975

### Summary of Invention

### Technical Problem

However, the measuring apparatus of the non-linear Raman spectroscopic method disclosed in the above Non-Patent Literature 1 is configured by developing, on large optical surface place, expensive main components including an ultrashort pulsed laser generating device, an optical parametric oscillator, a spectrometer, a CCD detector with high-sensitivity and low noise, and by achieving an accurate optical path. Accordingly, experience has been needed to optically adjust these components. In addition, generally, users' general uses targeting biological samples as measurement targets, for example, have often been limited and difficult.

In the above Non-Patent Literature 2, by use of pump light with a narrow line width, a spectral resolution of anti-Stokes light being 26cm⁻¹ was obtained. In this method, however, since pulse widths of the pump light and the Stokes light are largely different from each other, the generation efficiency of the anti-Stokes light is reduced. As a result, it becomes difficult to obtain a large signal corresponding to the anti-Stokes light.

Accordingly, in view of the above circumstances, the present disclosure proposes a simpler and more sensitive measuring apparatus and measuring method using an inexpensive ultrashort pulsed laser having relatively low output as a light source in the CARS spectroscopic method and also using an optical soliton as Stokes light.

### Solution to Problem

According to the present disclosure, there is provided a measuring apparatus including: a light source unit configured to emit pulsed laser light used for pump light and Stokes light that excite a predetermined molecular vibration of a measurement sample; a Stokes light generating unit configured to modulate an intensity of the pulsed laser light generated by the light source unit with a predetermined reference frequency and to generate Stokes light having a predetermined wavelength using the pulsed laser light having the modulated intensity; a time delaying unit configured to delay, by a predetermined time, the pump light using the pulsed laser light generated by the light source unit or the Stokes light generated by the Stokes light generating unit; a detecting unit configured to detect, by lock-in detection, transmitted light that has been transmitted through the measurement sample irradiated with the pump light and the Stokes light having a controlled time delay amount, or reflected light from the measurement sample; and an arithmetic processing device configured to perform predetermined arithmetic processing on the basis of anti-Stokes light that is detected by lock-in detection by the detecting unit while controlling the intensity modulation in the Stokes light generating unit and the time delay amount in the time delaying unit. The Stokes light generating unit transmits the pulsed laser light having the modulated intensity through a non-linear optical fiber to generate and set, as the Stokes light, an optical soliton pulse having a wavelength corresponding to the intensity of the pulsed laser light that is to be incident on the non-linear optical fiber, and the time delaying unit delays the time of the pump light or the Stokes light in accordance with a center wavelength of the optical soliton pulse.

According to the present disclosure, there is provided a measuring method including: emitting pulsed laser light used for pump light and Stokes light that excite a predetermined molecular vibration of a measurement sample; modulating an intensity of the generated pulsed laser light with a predetermined reference frequency and generating Stokes light having a predetermined wavelength using the pulsed laser light having the modulated intensity; delaying, by a predetermined time, the pump light using the generated pulsed laser light or the generated Stokes light; detecting, by lock-in detection, transmitted light that has been transmitted through the measurement sample irradiated with the pump light and the Stokes light having a controlled time delay amount, or reflected light from the measurement sample; and performing predetermined arithmetic processing on the basis of anti-Stokes light that is detected by lock-in detection by the detecting unit while controlling the intensity modulation when generating the Stokes light and the time delay amount when delaying the time. In generating the Stokes light, by transmitting the pulsed laser light having the modulated intensity through a non-linear optical fiber, an optical soliton pulse having a wavelength corresponding to the intensity of the pulsed laser light that is to be incident on the non-linear optical fiber is generated and set as the Stokes light, and the time of the pump light or the Stokes light is delayed in accordance with a center wavelength of the optical soliton pulse.

According to the present disclosure, the intensity of the pulsed laser light is modulated with the predetermined reference frequency, and the pulsed laser light having the modified intensity is transmitted through the non-linear optical fiber, and accordingly, the optical soliton pulse having a wavelength corresponding to the intensity of the pulsed laser light to be incident on the non-linear optical fiber is generated and used as Stokes light. In addition, the time of the pump light or Stokes light is delayed in accordance with the center wavelength of the optical soliton pulse, and the transmitted light that has been transmitted through the measurement sample irradiated with the pump light or Stokes light having the controlled time delay amount or the reflected light from the measurement sample is detected by lock-in detection.

### Advantageous Effects of Invention

As described above, according to the present disclosure, it becomes possible to achieve a simpler and more sensitive measuring apparatus and measuring method using an inexpensive ultrashort pulsed laser having relatively low output as a light source in the CARS spectroscopic method and also using an optical soliton as Stokes light.

### Brief Description of Drawings

[FIG. 1] FIG. 1 is a block diagram showing an example of a configuration of a measuring apparatus according to a first embodiment of the present disclosure.
[FIG. 2] FIG. 2 is a block diagram showing an example of a configuration of an arithmetic processing device included in a measuring apparatus according to the embodiment.
[FIG. 3A] FIG. 3A is an explanatory diagram for describing an example of a light intensity modulator according to the embodiment.
[FIG. 3B] FIG. 3B is an explanatory diagram for describing an example of a light intensity modulator according to the embodiment.
[FIG. 4] FIG. 4 is an explanatory diagram for describing an example of a light intensity modulator according to the embodiment.
[FIG. 5] FIG. 5 is an explanatory diagram showing an example of an optical path diagram in a measuring apparatus according to the embodiment.
[FIG. 6] FIG. 6 is a graph showing a group velocity dispersion characteristic of a non-linear optical fiber.
[FIG. 7] FIG. 7 is a graph showing an example of a relation between incident intensity of light on a non-linear optical fiber and a center wavelength of an optical soliton pulse.
[FIG. 8A] FIG. 8A is a graph showing an example of an optical soliton pulse generated in a Stokes light generating unit.
[FIG. 8B] FIG. 8B is a graph showing an example of an optical soliton pulse generated in a Stokes light generating unit.
[FIG. 8C] FIG. 8C is a graph showing an example of an optical soliton pulse generated in a Stokes light generating unit.
[FIG. 9] FIG. 9 is an explanatory diagram for describing a group velocity dispersion control unit according to the embodiment.
[FIG. 10] FIG. 10 is a graph showing an example of a relation between a wavelength of an optical soliton pulse and a time delay amount.
[FIG. 11] FIG. 11 is a graph showing an example of a relation between incident intensity of light on a non-linear optical fiber and a time delay amount.
[FIG. 12] FIG. 12 is a block diagram for illustrating an example of a hardware configuration of an arithmetic processing device according to an embodiment of the present disclosure.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Note that the description will be made in the following order.
(1) First Embodiment
   (1-1) Regarding Configuration of Measuring Apparatus
   (1-2) Regarding Example of Optical Path of Measuring Apparatus
(2) Regarding Hardware Configuration of Arithmetic Processing Device according to Embodiment of Present Disclosure
(3) Conclusion

### (First Embodiment)

### <Regarding Configuration of Measuring Apparatus>

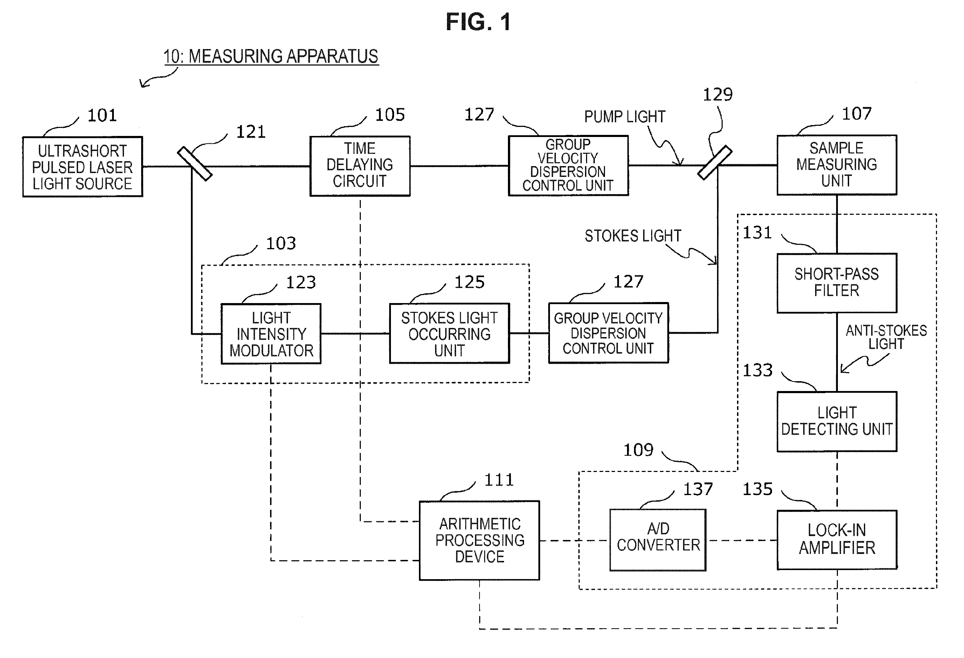

First, an example of a configuration of a measuring apparatus according to a first embodiment of the present disclosure will be described in detail with reference to FIG. 1. FIG. 1 is a block diagram showing the example of the configuration of the measuring apparatus according to the first embodiment of the present disclosure.

A measuring apparatus 10 according to the present embodiment mainly includes, as shown in FIG. 1, an ultrashort pulsed laser light source 101, a Stokes light generating unit 103, a time delaying circuit 105, a sample measuring unit 107, a detecting unit 109, and an arithmetic processing device 111.

A CARS spectroscopic method that is focused on in the present disclosure uses two types of pulsed light: pump light (frequency: ωₚ) and Stokes light (frequency: ωₛ). The ultrashort pulsed laser light source 101 that serves as a light source unit emits pulsed laser light used for the pump light and the Stokes light that excite a predetermined molecular vibration of a measurement sample. In the present embodiment, the pulsed laser light emitted from the ultrashort pulsed laser light source 101 is guided to a beam splitter 121 and is split into two optical paths. One optical path is an optical path for the pump light and the other optical path is an optical path for the Stokes light. In the present embodiment, the pulsed laser light distributed for the pump light is used directly as the pump light.

In the CARS spectroscopic method, when the light beat frequencies of the pump light and the Stokes light are equal to a specific molecular vibration frequency (frequency: Ω) of the measurement sample, the scattering intensity of the anti-Stokes light (AS light) from the measurement sample becomes high, and the acquired signal intensity is increased.

Thus, if the later described Stokes light generating unit 103 can control the center wavelength of the Stokes light pulse in a broad region at high speed and with high accuracy, the wavelength of the Stokes light can be selected arbitrarily, and the measuring apparatus according to the present embodiment can be applied to a broad range from acquiring spectral spectra to imaging and be generalized.

Specifically, in the present embodiment, as shown in FIG. 1, a light intensity modulator 123 and a Stokes light occurring unit 125 are provided as the Stokes light generating unit 103. The light intensity modulator 123 controls the center wavelength of the Stokes light pulse in a broad region at high speed and with high accuracy. The light intensity modulator 123 will be described later in detail. In addition, in the present embodiment, the Stokes light occurring unit 125 is a simple one configured from a highly non-linear optical fiber, in particular, a highly non-linear photonic crystal fiber and an input/output coupling thereof (such as an objective lens).

In the above described general CARS spectroscopic method, what includes the light intensity modulator 123 and the Stokes light occurring unit 125 in the present embodiment may have been another ultrashort pulse (mode synchronous) laser that synchronizes with the ultrashort pulse (mode synchronous) laser for the pump light or an optical parametric oscillator. However, it has been impossible for these devices to change the wavelength at high speed. For example, in a case of using two ultrashort pulsed lasers, the wavelength selection element in the laser oscillator is mechanical in many cases; in a case of using the optical parametric oscillator, tuning is necessary in accordance with the temperature phase match or angle phase match conditions of non-linear optical crystals.

In contrast, when the non-linear optical efficient is high as the highly non-linear photonic crystal fiber and the zero scattering wavelength of the highly non-linear photonic crystal fiber is made to be a value of a little shorter wavelength than the wavelength of the pump light, in a wavelength region in which the desired Stokes light occurs, the highly non-linear photonic crystal fiber operates in an anomalous scattering range. As a result, the optical soliton is generated in a manner than the self-phase modulation effect of the ultrashort light pulse is balanced with the group velocity dispersion of the fiber. The fundamental soliton center wavelength of the optical soliton is dependent on the peak power of the excited light pulse by the soliton self-frequency shift phenomenon (Soliton Self-Frequency Shift). The response time of the soliton self-frequency shift phenomenon is very fast, and it becomes possible to sweep and select the wavelength at a speed as high as about 2 MHz (furthermore, about 1 GHz), for example.

In the Stokes light generating unit 103 according to the present embodiment, accordingly, the light intensity modulator 123 controls the intensity of the pulse beam light that has been split by the beam splitter 121 and modulates the frequency thereof with a predetermined reference frequency. After that, the pulse beam light whose intensity is controlled in a manner that the optical soliton of the desired center wavelength can occur is made to be incident on the highly non-linear photonic crystal fiber, enabling the generation of the FM modulated Stokes light having the desired wavelength. Note that the intensity of the Stokes light generating unit 103 (the light intensity modulator 123 in particular) is controlled by the arithmetic processing device 111.

Here, the reference frequency in the light intensity modulator 123 is preferably 100 kHz or more, for example. Many of external electric noises, noises depending on mechanical vibrations or fluctuations of systems, stray light noises entering an optical system, noises of laser light sources, and the like are often frequency components of less than 100 kHz. Accordingly, by setting the reference frequency used for the frequency modulation to 100 kHz or more, the above noises can be eliminated and a signal-to-noise ratio can be increased.

In addition, in the measuring apparatus 10 according to the present embodiment, the time delaying circuit 105 serving as a time delaying unit delays at least one of the pump light and the Stokes light by a predetermined time. The time delaying circuit can be formed by the combination of, but not limited to, various optical members including a mirror, a piezo stage, and the like, for example.

In the example shown in FIG. 1, the time delaying circuit 105 changes the optical path length of the pump light to delay the pump light by a predetermined time, so as to make the pulse of the pump light and the pulse of the Stokes light reach the sample at the same timing. The time delaying circuit 105 is controlled by the arithmetic processing device 111 so that the optical path length can correspond to the center wavelength of the optical soliton pulse used as the Stokes light.

The group velocity dispersion is controlled so that the pump light and the Stokes light can have the same chirp rate (Δω/Δτ) by a group velocity dispersion control unit 127 (more specifically, positive chirping (up-chirp) is performed), and then the pump light and the Stokes light are combined by a dichroic mirror 129 to be the identical beam, so as to irradiate the sample (measurement sample) placed on the sample measuring unit 107.

Since the CARS spectroscopy is spectroscopy using a third-order non-linear optical process, the incident light pulse intensity is desirably very high. In order to increase the incident light pulse intensity, the sample measuring unit 107 equipped with a microscope function is used. The objective lens provided on the microscope function condenses the incident light pulse, and the sample is irradiated with pulsed light having sufficient intensity for the third-order non-linear optical process. Note that, in the measuring apparatus 10 according to the present embodiment, the phase match conditions in the third-order optical process are automatically satisfied because of the converging beam optical system.

In order to acquire a CARS spectral spectrum, the wavelength of the optical soliton is swept over a predetermined wavelength region (for example, at least a part of a molecular fingerprint region). In order to sweep the wavelength of the optical soliton, the arithmetic processing device 111 controls the light intensity modulator 123 so as to continuously change the intensity of the pulsed laser light entering the Stokes light occurring unit 125, for example.

In order to perform imaging, in a state where the wavelength of the optical soliton is fixed to the Stokes light wavelength corresponding to a specific molecular vibration, a sample stage provided in the sample measuring unit 107 is mechanically scanned or the incident light beam or the output light beam is scanned by a beam scanner such as a galvanometer mirror to perform XY scanning of the measurement sample, for example, and acquire the image contrast. In performing imaging, a plurality of molecular vibrations (two molecular vibrations, for example) may be focused on, and a plurality of wavelengths (two wavelengths, for example) may be selected to measure the anti-Stokes light in order to set the ratio of the focusing spectrum as the image contrast.

The output beams from the sample measuring unit 107 are guided to the detecting unit 109, as shown in FIG. 1. The detecting unit 109 includes, as shown in FIG. 1, a short-pass filter 131, a light detecting unit 133, a lock-in amplifier 135, and an A/D converter 137.

The short-pass filter 131 is a filter that transmits only the anti-Stokes light from among the output beams from the sample measuring unit 107. The wavelength of the anti-Stokes light is shorter than that of the pump light, and accordingly, self-fluorescence having a spectrum whose wavelength is longer than that of the pump light can be separated by the short-pass filter 131 with a ratio of about 10⁶:1. Thus, only the anti-Stokes light from the measurement sample placed on the sample measuring unit 107 can be guided to the later described light detecting unit 133.

The light detecting unit 133 is a device that detects signal light that has been transmitted through the short-pass filter 131. The light detecting unit 133 converts the signal of the anti-Stokes light to photocurrent, and the photocurrent is outputted to the later described lock-in amplifier 135. As such light detecting unit 133, for example, it is possible to use a photodiode such as a Si photo diode. In addition, if the dynamic range is sufficiently wide and there is a response in the modulation frequency (reference frequency), it is also possible to use a photomultiplier tube (PhotoMultiplier Tube: PMT), an avalanche photodiode (Avalanche PhotoDiode: APD), and the like.

The lock-in amplifier 135 uses the photocurrent outputted from the light detecting unit 133 to perform lock-in detection on the basis of the reference frequency used when the Stokes light generating unit 103 modulates the intensity of the laser pulsed light. The reference frequency used by the lock-in amplifier 135 is controlled by the arithmetic processing device 111.

In general, shot noise and thermal noise are constant regardless of the frequency of a signal, and are in proportion to the square root of the width of the frequency band of the signal. Accordingly, in a case where it is known that the signal frequency varies by a predetermined frequency, by use of a narrow band filter centering the frequency, the noise can be reduced and the signal can be acquired at a high signal-to-noise ratio. In the lock-in detection method, a signal is modulated with a certain frequency, and by multiplying the same reference frequency, conversion is performed to acquire an alternating-current component and a direct-current component having twice as high as frequency, and through a low-pass transmitting filter having high performance, only the direct-current component is extracted. Thus, even when the signal is a faint signal of ΔI/I being about 10⁻⁶ or 10⁻⁷, the signal can be detected.

The lock-in amplifier 135 performs the lock-in detection of the photocurrent outputted from the light detecting unit 133 on the basis of the reference frequency by the above mechanism, so as to extract an anti-Stokes light signal overlapping with the photocurrent. The lock-in amplifier 135 outputs the anti-Stokes light signal obtained by the lock-in detection to the later described A/D converter 137. The A/D converter 137 performs A/D conversion of the anti-Stokes light signal outputted from the lock-in amplifier to output the anti-Stokes light signal to the arithmetic processing device 111.

Further, in recent years, digital storage oscilloscopes, analog-digital converters, FPGA boards, and the like, having frequency bands of several GHz or more have been commercially available. By use of such devices, it becomes possible to perform rapid analog-digital conversion of the photocurrent detected by the light detecting unit 133 so as to add and average the photocurrent as signal processing, and by performing fast Fourier transform, it becomes possible to extract only the reference signal frequency component. As a result, by use of such devices, it becomes possible to achieve a function equivalent to the lock-in detection.

The arithmetic processing device 111 controls the intensity modulation in the Stokes light generating unit 103 and the time delay amount in the time delaying unit 105, while performing predetermined arithmetic processing on the basis of the anti-Stokes light detected by the lock-in detection by the detecting unit 109. In other words, the arithmetic processing device 111 controls the light intensity modulator 123, the time delaying circuit 105, and the lock-in amplifier 135, while performing predetermined arithmetic processing on the basis of the anti-Stokes light. Detailed functions of the arithmetic processing device 111 will be described later.

As described above, the measuring apparatus 10 according to the present embodiment continuously changes the intensity of the pulsed light incident on the highly non-linear photonic crystal fiber, for example, so as to perform minute modulation (FM modulation) of the center wavelength of the optical soliton pulse while sweeping the center wavelength. In addition, since minute modulation (FM modulation) has been performed on the center wavelength of the fundamental soliton pulse (optical soliton pulse) used as the Stokes light, by performing the lock-in detection of the anti-Stokes light signal by the later described detecting unit 109 with the modulation frequency (reference frequency), it is possible to acquire a signal from which the non-resonant background is eliminated and which is equal to the differential Raman spectrum. In this case, the arithmetic processing device 111 performs control by synchronizing the wave sweeping and time delaying amount. As a result, by use of the measuring apparatus 10 according to the present embodiment, it becomes possible to acquire the FM-CARS spectral spectrum.

In addition, in the measuring apparatus 10 according to the present embodiment, by fixing the intensity of the pulsed light incident on the highly non-linear photonic crystal fiber, it becomes possible to select the wavelength of the optical soliton pulse so as to correspond to a specific molecular vibration. Since minute modulation (FM modulation) has been performed on the center wavelength of the fundamental soliton pulse (optical soliton pulse) used as the Stokes light, by performing the lock-in detection of the anti-Stokes light signal by the later described detecting unit 109 with the modulation frequency (reference frequency), it becomes possible to acquire a contrast (image contrast image) of a specific molecular vibration spectrum corresponding to the selected wavelength. As a result, by use of the measuring apparatus 10 according to the present embodiment, it becomes possible to perform FM-CARS spectral imaging. In this case, since wavelength sweeping is not performed unlike in the above example, it is possible to acquire an imaging image at higher speed.

Further, the FM-CARS spectral imaging computes the ratio of spectrum intensity between a plurality of focusing wavelength (for example, two or more wavelengths) to acquire the image contrast. Here, the wavelength can be switched freely for each image, for each line, or for each pixel, for example.

For example, in biological samples and the like, a large number of complex, various spectra exist, such as a stretching vibration of C-H regarding lipid, and an amide group, a disulfide coupling (-S=S-), and the like regarding a peptide bond of protein. Since an anti-Stokes light signal is in proportion to the number of molecules, a simple use of specific spectrum intensity might not be enough to correspond to a biochemical or physiological function of the biological sample. In such a case, when a plurality of functional groups are focused on and a spectrum intensity ratio is focused on, in some cases, not only material density distribution (molecular number density) but also other significant biological information may be acquired.

The measuring apparatus 10 according to the present embodiment has been described above in detail with reference to FIG. 1. Note that in the above description, a case where the detecting unit 109 detects transmitted light from the measurement sample has been described; however, the detecting unit 109 may detect reflected light from the measurement sample, or may detect both the transmitted light and the reflected light.

### [Regarding Configuration of Arithmetic Processing Device]

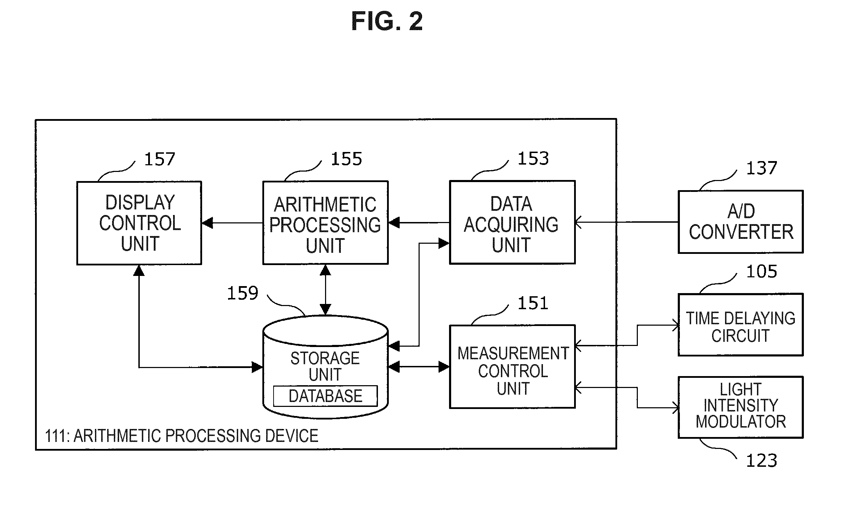

Next, the configuration of the arithmetic processing device 111 included in the measuring apparatus 10 according to the present embodiment will be described in detail with reference to FIG. 2. FIG. 2 is a block diagram showing an example of the configuration of the arithmetic processing device 111 according to the present embodiment.

The arithmetic processing device 111 according to the present embodiment mainly includes, as shown in FIG. 2, a measurement control unit 151, a data acquiring unit 153, an arithmetic processing unit 155, a display control unit 157, and a storage unit 159.

The measurement control unit 151 is achieved by, for example, a CPU (Central Processing Unit), a ROM (Read Only Memory), a RAM (Random Access Memory), a communication device, and the like. The measurement control unit 151 controls various drivers (not shown) and the like provided in the measuring apparatus 10, so as to control modulation processing in the light intensity modulator 123, the time delay amount in the time delaying circuit 105, and the lock-in detection in the lock-in amplifier 135. In addition, other than the above control, the measurement control unit 151 can control the entire measuring processing in the measuring apparatus 10.

Note that, when performing the above control, the measurement control unit 151 can refer to various databases stored in the later described storage unit 159 and the like. In addition, by use of a model calculation result and the like regarding the propagation velocity of light in the non-linear optical fiber, the measurement control unit 151 can perform the above control.

The data acquiring unit 153 is achieved by, for example, a CPU, a ROM, a RAM, a communication device, and the like. The data acquiring unit 153 acquires data (in other words, measurement data regarding the anti-Stokes light) of a digital signal outputted from the A/D converting unit 137 of the measuring apparatus 10 and outputs the data to the later described arithmetic processing unit 155. Alternatively, the data acquiring unit 153 may output the acquired digital signal to the later described display control unit 157, and output the acquired digital signal to a display device such as a display. Further, the data acquiring unit 153 may associate the acquired digital signal data with time data regarding the date, time, and the like at which the data is acquired and store the data as history information in the later described storage unit 159.

The arithmetic processing unit 155 is achieved by, for example, a CPU, a ROM, a RAM, and the like. By use of the data (the data regarding the anti-Stokes light) of the digital signal acquired by the data acquiring unit 153, the arithmetic processing unit 155 performs predetermined arithmetic processing. Thus, the arithmetic processing unit 155 can generate an FM-CARS spectral spectrum and an FM-CARS spectral imaging image.

Here, the FM-CARS spectral spectrum generated by the measuring apparatus 10 according to the present embodiment corresponds to a so-called differential Raman spectrum. Accordingly, when a Raman shift of the measurement sample is attributed, by use of the acquired FM-CARS spectral spectrum (differential Raman spectrum), the attribution can be performed sufficiently.

Alternatively, the arithmetic processing unit 155 may attribute the acquired spectrum by use of the FM-CARS spectral spectrum, various Raman spectra data, databases, and the like stored in the storage unit 159 and the like. In this case, the arithmetic processing unit 155 can calculate the Raman spectrum from the differential spectrum using a known method. The method may be, for example, but not limited to, a method using Fourier deconvolution (Fourier Deconvolution) as disclosed in the above Non-Patent Document 5, a method using an EM algorism as disclosed in the above Non-Patent Document 6, or the like.

When generating the FM-CARS spectral spectrum and an image by the FM-CARS spectral imaging, the arithmetic processing unit 155 causes these generated data to be outputted visually to a user via the display control unit 157. Alternatively, the arithmetic processing unit 155 may output these generated data via a printer or the like or store these generated data in various recording media as electronic data. In addition, the arithmetic processing unit 155 may associate these generated data with time data regarding the date, time, and the like at which the data is generated and store the generated data as history information in the later described storage unit 159.

The display control unit 157 is achieved by, for example, a CPU, a ROM, a RAM, an output device, a communication device, or the like. The display control unit 157 controls the arithmetic processing device 111 and display content of the display device, such as a display, provided outside of the arithmetic processing device 111. Specifically, the display control unit 157 visualizes the results of CARS spectroscopic processing in the arithmetic processing unit 155, and controls display at the time of displaying the CARS spectral spectrum on a display screen or displaying the contrast image on the display screen. Thus, the user (operator) of the measuring apparatus 10 can easily recognize the measurement results by the CARS spectroscopic method of the focusing molecular vibration on the spot.

The storage unit 159 is achieved by, for example, RAM, a storage device, or the like. In the storage unit 159, there may be recorded various databases used when the measurement control unit 151 controls the light intensity modulator 123 or the time delaying circuit 105, various programs including application used for various kinds of arithmetic processing performed by the arithmetic processing unit 155, various parameters or processes in processing that should be stored when certain processing is performed, other databases, and the like, as appropriate.

Each processing unit such as the measurement control unit 151, the data acquiring unit 153, the arithmetic processing unit 155, or the display control unit 157 may freely access the storage unit 159 to write or read data.

The example of the functions of the arithmetic processing device 111 according to the present embodiment has been described above. Each structural element described above may be configured from general members or circuits, or may be configured from hardware having a specialized function as each structural element. In addition, the CPU or the like may perform all the functions of the structural elements. Therefore, depending on the technical level at the time of implementing the present embodiment, the configuration to be used may be modified as appropriate.

Note that it is possible to create a computer program for achieving each function of the arithmetic processing device according to the present embodiment described above, and to incorporate the program in a personal computer or the like. It is also possible to provide a computer-readable recording medium having such a computer program stored therein. Examples of the recording media include a magnetic disk, an optical disc, a magneto-optical disk, a flash memory, and the like. In addition, the computer program may be distributed via a network, for example, without the use of a recording medium.

### [Regarding Light Intensity Modulator]

Next, an example of the light intensity modulator 123 used in the measuring apparatus 10 according to the present embodiment will be described in detail.

As described above, in the measuring apparatus 10 according to the present embodiment, by controlling the intensity of the pulsed light to be incident on the Stokes light occurring unit 125, the center wavelength of the Stokes light is swept or selected. In the measuring apparatus 10 according to the present embodiment, the light intensity modulator 123 according to the present embodiment is used to control the intensity of the pulsed light and the degree of modulation; however, it is possible to use any of the following devices as the light intensity modulator 123, for example.

### - Example of Light Intensity Modulator-1

For example, as the light intensity modulator 123, it is possible to use an acousto-optic modulator (Acoust Optical Modulator: AOM) or an electro-optic modulator (Electro Optical Modulator: EOM). Such a modulator is controlled by the measurement control unit 151 of the arithmetic processing device 111 via a driver such as an AOM driver or an EOM driver.

In a case where the acousto-optic modulator or the electro-optic modulator is used as the light intensity modulator 123, although the group velocity dispersion largely differs, high-speed modulation of about 10 to 100 MHz is possible, and noise can be suppressed more effectively. In this case, the group velocity dispersion may be compensated for by adding a known group velocity dispersion compensating unit such as a prism pair or a grating pair.

In addition, such an acousto-optic modulator or electro-optic modulator can select given light intensity at random by a driven electric signal. Accordingly, it is possible to sweep the wavelength at high speed by a driving signal of a sawtooth wave or to select a given wavelength by a driving signal of a predetermined wave. However, the acousto-optic crystal or electro-optic crystal used for such an acousto-optic modulator or electro-optic modulator generally has a thickness of 1 cm or more and also high positive wavelength dispersion. This broadens the pulse width of the ultrashort pulsed light emitted from the ultrashort pulsed laser light source 101. Accordingly, it may be desirable to correct the group velocity dispersion when the pulse width of the ultrashort pulsed light used as the light source is 100 femtoseconds (fs) or less, for example. In this case, it is desirable to insert a known group velocity dispersion compensating unit such as a prism pair or a grating pair in a preceding or following stage of the modulator used.

### - Example of Light Intensity Modulator-2

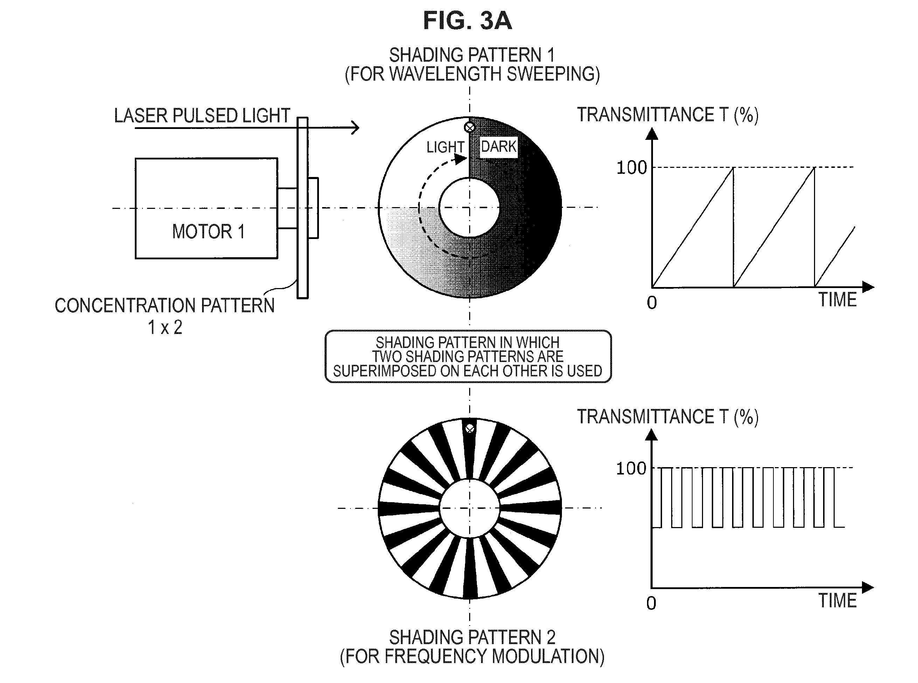

Next, another example of the light intensity modulator 123 will be described in detail with reference to FIG. 3A to FIG. 4. FIG. 3A to FIG. 4 are explanatory diagrams for describing an example of the light intensity modulator according to the present embodiment.

It is possible to use, as the light intensity modulator 123 according to the present embodiment, a rotation-type neutral density filter (ND filter) as illustrated in FIG. 3A, for example, used for frequency modulation and including a shading pattern in which the concentration changes continuously.

A light intensity modulator shown in FIG. 3A is provided with a rotation-type neutral density filter for wavelength sweeping having a pattern in which the concentration changes continuously (a shading pattern 1 in FIG. 3A) and a rotation-type neutral density filter for frequency modulation having a shading pattern for frequency modulation (a shading pattern 2 in FIG. 3A). A shading pattern 1 × 2 in which the shading pattern 1 and the shading pattern 2 are superimposed on each other (multiplied by each other) is used.

In the shading pattern 1 shown in FIG. 3A, the concentration changes continuously, and as shown in an upper light graph in FIG. 3A, each time the shading pattern 1 rotates once, the intensity of light transmitted through the shading pattern 1 also changes continuously. Accordingly, the shading pattern 1 serves as the shading pattern for wavelength sweeping. In the case of FIG. 3A, although the continuous changeable concentration cycle of the shading pattern is one cycle, by providing a plurality of continuous changeable shading patterns (twice, four times, or the like) in one cycle, it becomes possible to increase the speed of wavelength sweeping without increasing the rotation frequency of a motor.

In the shading pattern 2 shown in FIG. 3A, parts having a relatively high light transmittance and parts having a relatively low transmittance are alternately arranged. This shading pattern is a pattern similar to a so-called light chopper. The modulation degree can be adjusted by the thickness of a metal thin film (aluminum: reflection type, chromium: absorption type) deposited on a plate. As shown in a lower right graph in FIG. 3A, the intensity of light transmitted through the shading pattern 2 changes in rectangular shapes. Accordingly, the shading pattern 2 serves as a shading pattern for frequency modulation, and by adjusting the rotation frequency, it becomes possible to control the magnitude of the modulation frequency.

The beam diameter of the ultrashort pulsed light to be incident on the light intensity modulator shown in FIG. 3A can be adjusted by an afocal focusing optical system. For example, when a beam is guided on the circumference of a circle of the shading pattern having a diameter of 66 mm, the number of rotation of the motor is 3000 rpm (=50 rps), and the cycle of shading is 0.1 mm on the circumference, if the diameter of the light beam is 0.1 mm, the modulation frequency is 66 × π × 50 / 0.1 = 100 kHz.

When a metal thin film having a pattern obtained by superimposing these two shading patterns (concentrations are multiplied) on each other is deposited, it is possible to form one ND filter (accordingly, the number of motors is also one). As a glass substrate of the ND filter, it is preferable to use a synthetic quartz substrate or a fused quartz substrate having low wavelength dispersion, and the thickness thereof is preferably about 1 mm. In this manner, it becomes possible to dramatically reduce the influence of pulse broadening compared with the acousto-optic modulator or the electro-optic modulator, and to reduce the pulse broadening of the incident ultrashort pulse to an ignorable level.

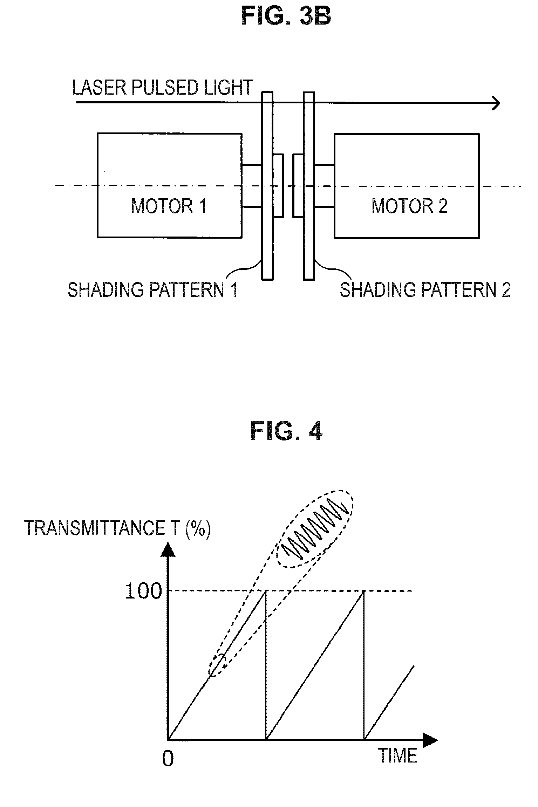

As a modification example of FIG. 3A, as shown in FIG. 3B, it is possible to make configuration in a tandem manner (continuously) by attaching an ND filter having the shading pattern 1 and an ND filter having the shading pattern 2 to respective different motors. In a case of applying a system of using two motors as shown in FIG. 3B, by fixing to a desired concentration part instead of rotating the shading pattern 1 for wavelength sweeping, it becomes possible to measure an FM-CARS spectral spectrum having a fixed wavelength of the Stokes light or to generate an image of FM-CARS spectral imaging.

As a motor that rotates such an ND filter, for example, a stepping motor (for low-speed rotation, <3000 rpm, for example), a DC motor (for high-speed rotation, ≥ 3000 rpm, for example), or the like, is selected depending on application.

For example, in a case of the light intensity modulator using one motor as shown in FIG. 3A, it is preferable to employ a DC motor capable of high-speed rotation. In addition, in a case of the light intensity modulator using two motors as shown in FIG. 3B, for example, by employing, as the motor of the shading pattern 1 for wavelength sweeping, a stepping motor having relatively low speed but capable of random access to a given rotation position, and by employing, as the motor of the shading pattern 2 for frequency modulation, a DC motor capable of high-speed rotation, it becomes possible to further increase the modulation frequency. Note that the rotation of the two ND filters can be synchronized (synchronization including division and multiplication) easily by the measurement control unit 151 performing control with a motor drive or the like referring to each light transmitting monitor signal, rotation signal of a rotation sensor, or the like. However, in the present disclosure, since the speed of wavelength sweeping (frequency) and the modulation frequency are different from each other by several orders of magnitude, such control does not always have to be performed.

By use of the light intensity modulator shown in FIG. 3A or FIG. 3B, it becomes possible to generate pulsed laser light having modified frequency and modified intensity shown in FIG. 4.

The example of the light intensity modulator 123 used in the measuring apparatus 10 according to the present embodiment has been described above with reference to FIG. 3A to FIG. 4.

### <Regarding Example of Optical Path Diagram of Measuring Apparatus>

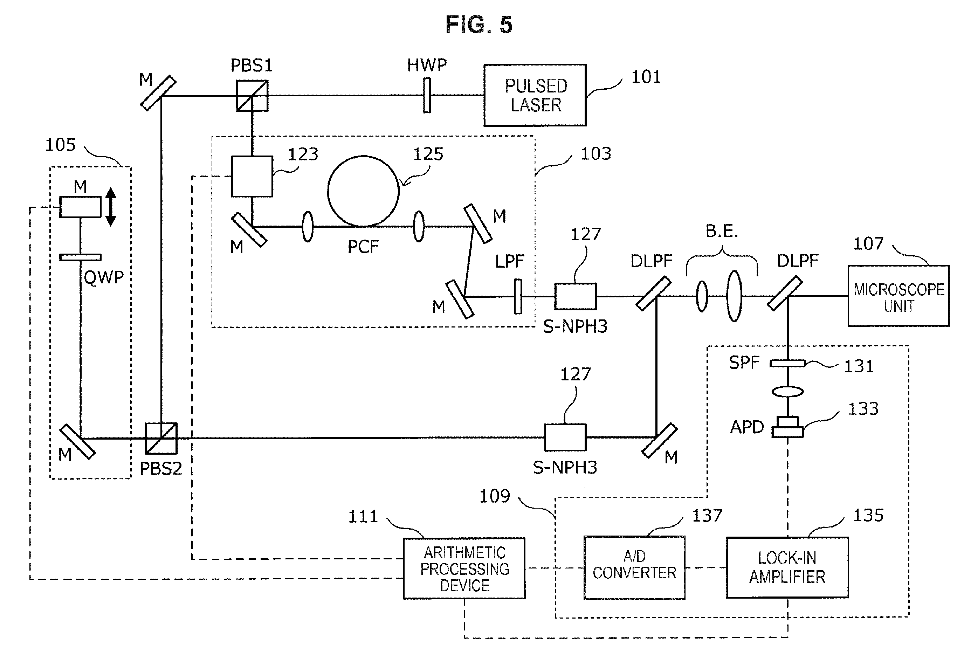

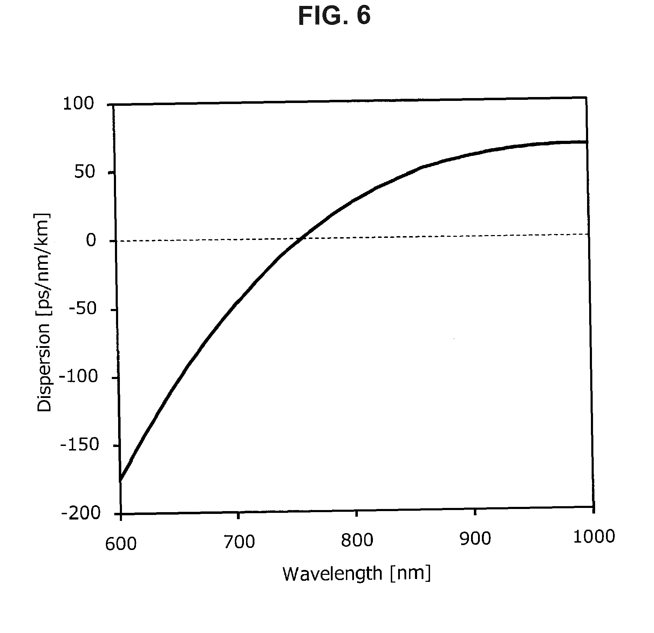

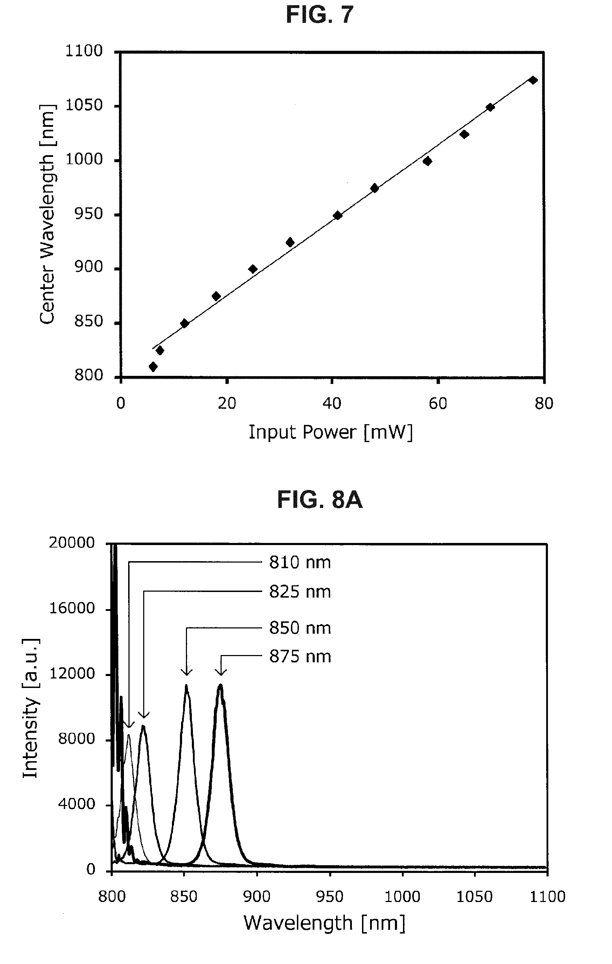

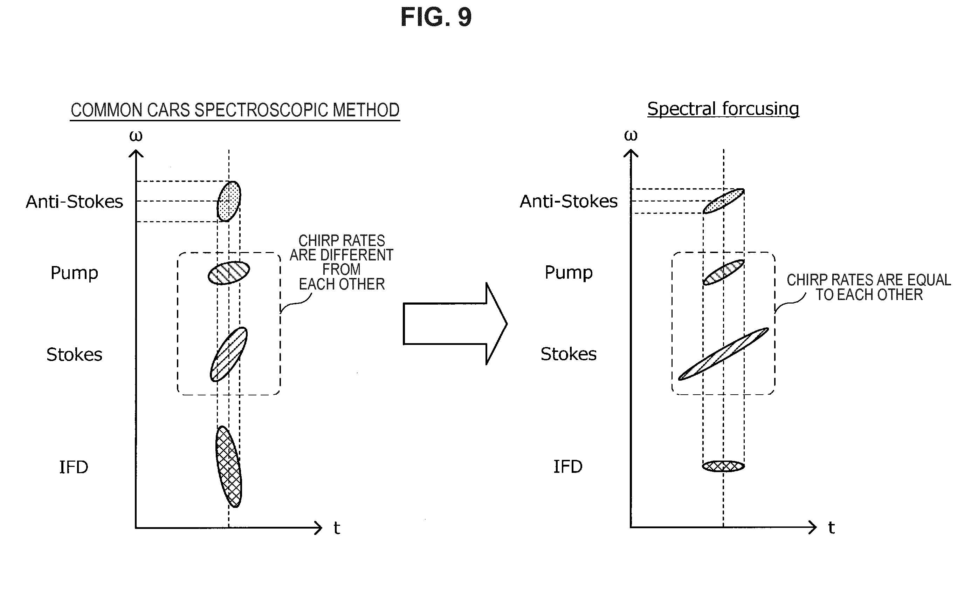

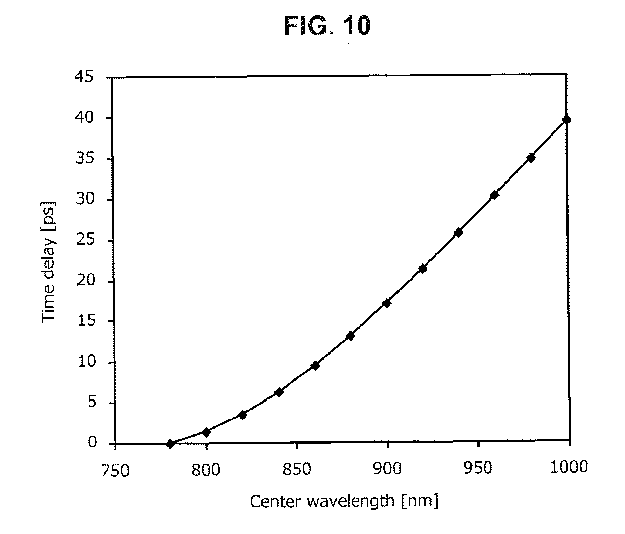

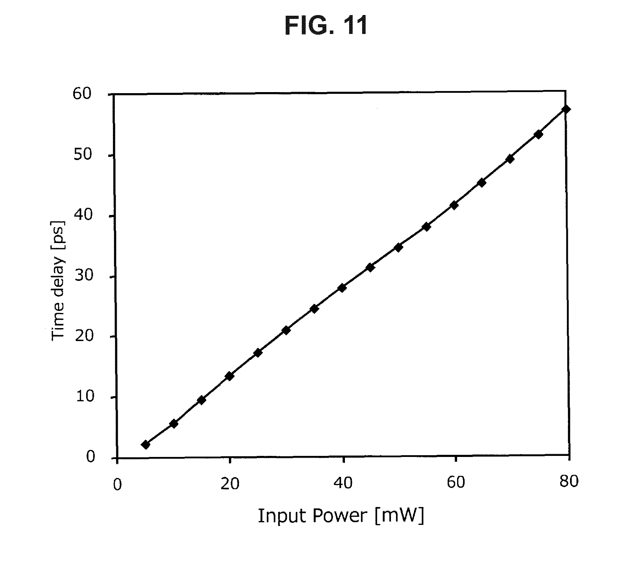

Next, an example of an optical path diagram of the measuring apparatus 10 according to the present embodiment will be described in detail with reference to FIG. 5 to FIG. 11. FIG. 5 is an explanatory diagram showing an example of an optical path diagram in the measuring apparatus according to the present embodiment. FIG. 6 is a graph showing a group velocity dispersion characteristic of a non-linear optical fiber. FIG. 7 is a graph showing an example of a relation between the incident intensity of light on a non-linear optical fiber and a center wavelength of an optical soliton pulse. FIGS. 8A to 8C are graphs showing examples of optical soliton pulses generated in the Stokes light generating unit. FIG. 9 is an explanatory diagram for describing the group velocity dispersion control unit according to the present embodiment. FIG. 10 is a graph showing an example of a relation between the wavelength of an optical soliton pulse and a time delay amount. FIG. 11 is a graph showing an example of a relation between the incident intensity of light on a non-linear optical fiber and a time delay amount.

### [Regarding Entire Configuration of Optical System]

In the example shown in FIG. 5, a fiber-type long/short pulse laser FFS-SHG from TOPTICA is used as the ultrashort pulsed laser light source 101 and linearly polarized pulsed laser light is emitted. The pulsed laser light has a center wavelength of 785 nm, a pulse width of 180 fs, a repetition frequency of 80 MHz, and a maximum average power of 100 mW.

In addition, a half wave plate (Half Wave Plate) HWP and a polarization beam splitter (Polarization Beam Splitter) PBS1 are used as the beam splitter 121, and 10 mW is distributed for the pump light and the remaining 90 mW is distributed for the Stokes light.

Further, as the Stokes light generating unit 103, there are provided the light intensity modulator 123 using an acousto-optic element AOM (A-200 from HOYA) or the self-made rotation-type ND filter shown in FIG. 3A and the Stokes light occurring unit 125 using a photonic crystal fiber PCF. In a case of using the acousto-optic element AOM as the light intensity modulator, the light is not focused and the light intensity is modulated with a modulation frequency of 2 MHz. Note that, in a case of modulation at higher speed, by placing the acousto-optic element AOM at a focal point of an afocal optical system of about f200, modulation can be performed with about 10 MHz. As the photonic crystal optical fiber PCF, 5 m NL-PM-750 from NKT is used, and objective lenses (NA0.65) for fiber coupling are provided on the respective ends of the photonic crystal optical fiber. In addition, on the following stage of the photonic crystal optical fiber PCF, a long-pass filter LPF (LP01-808 from Semrock) that blocks unnecessary light such as the pump light and the anti-Stokes light and transmit only the Stokes light is provided. Further, a pair of mirrors M is provided between the photonic crystal optical fiber PCF and the long-pass filter LPF so that the Stokes light and the pump light can be aligned to have the identical axis.

Meanwhile, the pump light that has been transmitted through the polarization beam splitter PBS1 is reflected by the polarization beam splitter PBS2 provided in the following stage and passes through a quarter wave plate (Quarter Wave Plate) QWP, and then is reflected by a mirror M placed on a movable stage such as a mechanical stepping motor linear stage, an ultrasonic wave motor linear stage, or a piezo stage, to pass through the quarter wave plate QWP again and is transmitted through the polarization beam splitter PBS2. These parts operate as a stable time delaying circuit 3. The measurement control unit 151 of the arithmetic processing device 111 controls the time delay amount of the pump light by controlling the position of the movable mirror M and adjusts the timing between a pulse of the pump light and a pulse of the Stokes light. In the example shown in FIG. 5, as a linear movable stage for the time delaying circuit 105, an ultrasonic wave motor driving X-axis stage XET70-6/16A from Technohands is used.

Further, on the optical path of the pump light and the Stokes light, as the group velocity dispersion control unit 127, high dispersion glass (S-NPH3 from Ohara), which is a transparent medium having positive group velocity dispersion, is placed. The function of the group velocity dispersion control unit 127 will be described later in detail.

Two pulsed beams of the Stokes light and the pump light are combined with each other by a dichroic long-pass filter (Dichroic Long Pass Filter) DLPF, and the beam diameters thereof are expanded by a beam expander (Beam Expander) BE, and then are radiated on a measurement sample on the sample stage attached to a microscope unit serving as the sample measuring unit 107. Here, as the dichroic long-pass filter DLPF, a dichroic long-pass filter 69894-L (cut-on wavelength 800 nm) from Edmund is used. In addition, TE-2000U from Nikon is used as the microscope unit, and a three-dimensional piezo stage from PI is mounted as the sample stage.

The anti-Stokes light returning from the measurement sample is reflected by a dichroic long-pass filter (Dichroic Long Pass Filter) DLPF and passes through the short-pass filter 131 (SPF) and is then focused to be incident on an avalanche photodiode APD serving as the light detecting unit 133. Here, as the dichroic long-pass filter, 69893-L (cut-on wavelength 750 nm) from Edmund is used. In addition, as the short-pass filter 131 (SPF), a short-pass filter SP01-785RU (cut-off wavelength 779 nm) from Semrock is used. Further, as the avalanche photodiode, an APD module C4777 from Hamamatsu Photonics is used.

The signal of the anti-Stokes light detected by the avalanche photodiode APD is outputted to the lock-in amplifier 135. As the lock-in amplifier 135, for example, LI5640 from NF Corporation can be used if the reference frequency is 100 kHz or less, a DSP lock-in amplifier type 7280 from Signal Recovery can be used if the reference frequency is 2 MHz or less, and a DSP2 phase digital lock-in amplifier type SR844 from Stanford Research system, or the like, can be used if the reference frequency is 2 MHz or more.

In a case where the spectral distribution of the Stokes light is desired to be measured, it is possible to use a compact spectrometer BBRC642E from B&K TEK, for example.

The anti-Stokes light measured by such an optical system is detected by lock-in detection and converted into a digital signal by the A/D converter 137, and then the arithmetic processing device 111 performs arithmetic processing.

Note that the optical system illustrated by the optical path shown in FIG. 5 is a so-called Epi-CARS spectroscopic optical system; however, a transmission-mode, i.e., Forward-CARS spectroscopic optical system as shown in FIG. 1 may be employed.

### [Regarding Optical Soliton Pulse]

FIG. 6 is a graph showing a dispersion parameter of the photonic crystal fiber NL-PM-750, the parameters having been fabricated on the basis of catalog data from NKT. The horizontal axis of FIG. 6 is the wavelength of light incident on the photonic crystal fiber and the vertical axis thereof is the dispersion parameter (D parameter). The graph in FIG. 6 shows a typical dispersion characteristic of the highly non-linear photonic crystal fiver having zero-wavelength dispersion at a wavelength of 750 nm. As is clear from this graph, the wavelength region of 750 nm or more is in an abnormal dispersion region where the dispersion parameter is positive, and when the pulse expansion by the dispersion effect is balanced with pulse compression by self-phase modulation (SPM), an optical soliton occurs. The optical soliton is not subjected to pulse expansion when propagating in the fiber, and travels in the fiber with a constant pulse width. In this abnormal dispersion region, attention should be paid because components with short wavelengths travel faster than components with long wavelengths.

As the power of light (incident power) incident on the optical fiber is increased, in a case where the initial pulse width is as short as 200 fs or less and the wavelength component has several nanometers or more, a long wavelength component is amplified by induced Raman scattering of a short wavelength component in the soliton pulse, and the center wavelength of the optical soliton shifts to the long wavelength side. This phenomenon is called soliton self-frequency shift (Soliton Self-Frequency Shift). In the soliton self-frequency shift, as the fiber length is longer, and as the incident peak power is stronger, the wavelength shifts to the longer wavelength side.

Here, when the incident power is increased, in the spectral distribution, other spectral peaks come to appear in the middle of the pump light wavelength and the center wavelength of the fundamental soliton, in addition to the fundamental soliton that is focused on. These peaks are higher-order solitons than the fundamental soliton. Such higher-order solitons occur because the increased incident power causes an energy that can generate a higher-order soliton other than the fundamental soliton to enter the optical fiber. However, the present inventors' investigation has revealed that the spectral peaks of these higher-order solitons are separated from the fundamental soliton used as the optical soliton pulse in the present embodiment by at least 50 nm or more. Accordingly, it is possible to selectively use the fundamental soliton in the measuring apparatus 10 according to the present embodiment.

FIG. 7 shows a relation of the center wavelength of the fundamental soliton with the average power (12 types) of ultrashort pulsed laser (after passing through the light intensity modulator 123) incident on the Stokes light occurring unit 125. As is clear from FIG. 7, it is fund that, by controlling the intensity of the pulsed laser incident on the Stokes light occurring unit 125, the center wavelength of the generated fundamental soliton can be selected.

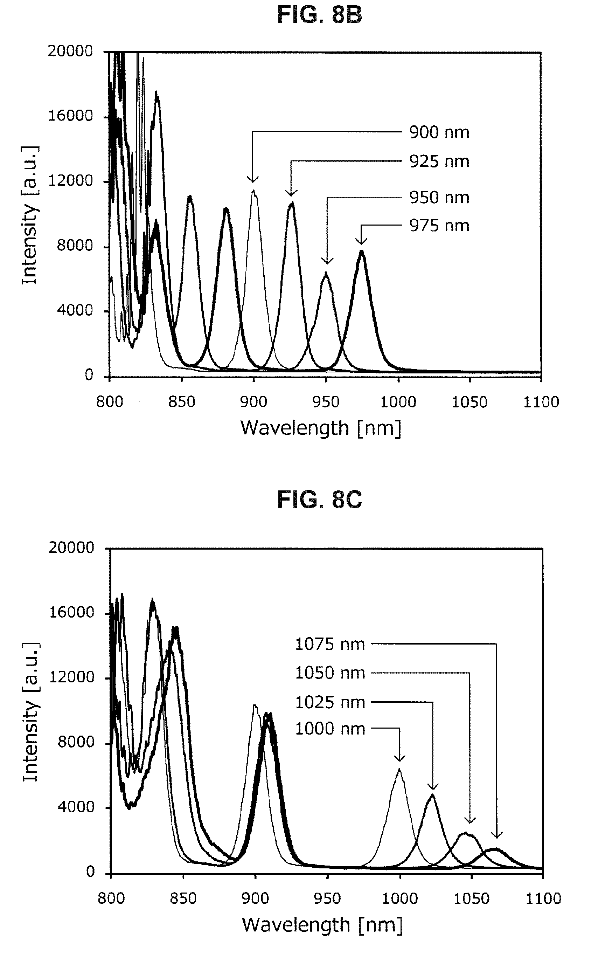

FIG. 8A to FIG. 8C each show the spectral distribution of each Stokes light beam. In FIG. 8A to FIG. 8C, the long-pass filter blocks all the residual components of the pump light of wavelengths of 800 nm or less and anti-Stokes light components. As is clear from FIG. 8A to FIG. 8C, it is found that, by controlling the intensity of pulsed laser incident on the Stokes light occurring unit 125, fundamental solitons having 12 types of center wavelengths are generated. Note that in FIG. 8B and FIG. 8C, peaks other than the spectral peaks shown by arrows are peaks corresponding to higher-order solitons. According to the present inventors' investigation, the spectral distribution of the fundamental solitons can be substantially approximated by Gaussian distribution, and full widths at half maximum thereof are 12 nm to 18 nm.

The fundamental soliton wave can be substantially regarded as a Fourier limited pulse. Considering that the pulse propagation in the photonic crystal fiber is in the abnormal distribution region, a fundamental soliton with a shorter center wavelength propagates faster than a fundamental soliton with a longer center wavelength. Accordingly, the time delay amount with respect to the pump light pulse is set to larger for the fundamental soliton with a shorter center wavelength.

### [Regarding Group Velocity Dispersion Control Unit]

The group velocity dispersion control unit 127 according to the present embodiment is provided so as to compensate for the group velocity dispersion of the pump light and the Stokes light and to increase the spectral resolution of CARS spectroscopy (that is, the anti-Stokes light). Here, the group velocity means the propagation velocity of the envelope of the pulsed light, that is, the propagation velocity of energies of pulses, and the group velocity dispersion indicates the expansion of pulsed light. The compensation processing of the group velocity dispersion is achieved by a technique called Spectral focusing (spectral focusing) disclosed in the above Non-Patent Literature 4. FIG. 9 is an explanatory diagram for describing the concept of Spectral focusing.

In the CARS spectroscopic method that is focused on in the present disclosure, pulsed light is used as a light source. When an instantaneous frequency (instantaneous frequency) that changes in the envelope of one pulse is indicated as ω(t), the frequency thereof can be indicated as ω(t) = ω₀ +2βt by using the fundamental frequency ω₀. Here, in the formula, the parameter β is called chirp parameter. In FIG. 9, the horizontal axis represents a time t and the vertical axis represents a frequency ω so as to indicate what characteristics each pulsed light beam has.

First, let us focus on a schematic diagram shown in the left of FIG. 9. In a general CARS spectroscopic method, for example, pulsed light that extends more in the temporal direction than in the frequency direction is used as the pump light, and pulsed light that extends more in the frequency direction than in the temporal direction is used as the Stokes light. In this case, since the two pulsed light beams have mutually different chirp rates, the instantaneous frequency difference (Instantaneous Frequency Difference: IFD), which is an instantaneous full width at half maximum in the light beat frequency distribution, extends in the frequency direction, and the observed anti-Stokes light also extends in the frequency direction, resulting in a reduction in the spectral resolution.

On the other hand, in Spectral focusing, by causing the pump light and the Stokes light (the fundamental soliton wave in the present disclosure) that are substantially close to Fourier limited pulses to pass together through the transparent medium (high dispersion glass in the example of FIG. 5) having positive group velocity dispersion, positive chirping (up-chirp) is performed so that the pulses have the same chirp rate (Δω/Δt). Here, the "positive chirping" means a state in which the frequency is low in the front end of the pulse and the frequency is high in the rear end of the pulse in the envelope of one pulse, and corresponds to the case where the chirp parameter β is positive in the above formula. By controlling the chirp rate in this manner, as shown in the right of FIG. 9, it becomes possible to narrow the instantaneous frequency difference IFD, and to increase the spectral resolution of the CARS spectroscopy (that is, the anti-Stokes light).

In the example shown in FIG. 5, the full width at half maximum of the spectrum of the pump light is 5 nm (Δω = 154 cm⁻¹ when converted into wavenumber) and a pulse width Δt thereof is 180 fs. On the other hand, the spectral width of the fundamental soliton corresponding to the Stokes light having a center wavelength of 900 m, is 20 nm (Δω = 462 cm⁻¹ when converted into wavenumber) from FIG. 8B and the pulse width Δt thereof is about 60 fs.

The group velocity dispersion is considered for the entire optical path shown in FIG. 5. Here, in the example shown in FIG. 5, mainly, the beam expander BE and the objective lenses, NA0.75 for example, in the microscope are considered. The sum total of the positive group velocity dispersions when converted into the length of the high dispersion glass S-NPH3 is about 1 cm.

When the length of the high dispersion glass S-NPH3 in the optical path of the pump light is 6 cm, the pulse width after passing is 410 fs, and when the length of the high dispersion glass S-NPH3 in the optical path of the Stokes light is 8.8 cm, the pulse width after passing is 1.23 ps. In this case, the chirp rates Δω/Δt are equally 380 cm⁻¹/ps, and each pulse width is expanded 2.3 times and 21 times. As described above, although the spectral resolution of the anti-Stokes light is decided by the instantaneous frequency difference IFD, in this example case, the spectral resolution is about 23 cm⁻¹. When compared with the spectral resolution of 154 cm^{- 1} being decided by the spectral width of the pump light in the general CARS spectroscopic method, in this example, the spectral resolution is increased to be about 1/7. Here, as the length of the high dispersion glass block is increased, the pulsed width is increased and the chirp rate is decreased, and the spectral resolution is further increased.

Meanwhile, the lower limit of the chirp rate is decided by a reduction in peak power, relaxation time, an increase in time delay amount, an overlap with an unnecessary soliton, and the like. These factors will be specifically described below.

Among the factors related to the lower limit of the chirp rate, a reduction in peak power is the most essential factor. Since the CARS spectroscopic method uses three-order non-linear optical effects, the reduction in peak power leads to a reduction in signal intensity of the anti-Stokes light. That is, the signal intensity (detection sensitivity with respect to the same incident power) and the spectral resolution are in a trade-off relation.

In addition, when the pulse width is increased and becomes longer than the phase relaxation time of a molecular vibration, the group excitation coherence of the molecular vibration is reduced and the signal intensity of the anti-Stokes light is reduced. Accordingly, a strain is generated in the spectral shape of the CARS spectral spectrum. When the pulse width is 1 ps to a few ps or more, the spectral shape is significantly influenced, and accordingly, the lower limit of the chirp rate (Δω/Δt) is almost limited by the reduction in peak power and the relaxation time.

The time delay amount is decided depending on the performance of the linearly moving stage provided as the time delaying circuit 105. A movement by 3 mm causes a time delay of 20 ps, and a known commercially available part can be used for practical use.

The time delay amount can be estimated by the dispersion parameter D of the highly non-linear photonic crystal fiber, that is, the group velocity dispersion characteristic as shown in FIG. 6, for example. The relation between the center wavelength of the optical soliton pulse used for measurement and the time delay amount can be estimated depending on the highly non-linear photonic crystal fiber used, as shown in FIG. 10, for example.

As for the overlap with an unnecessary soliton, for example, in an example of a fundamental soliton of 950 nm as shown in FIG. 8B, it is found that the unnecessary soliton appears near 850 nm. The difference in reaching time between the fundamental soliton and the unnecessary soliton is about 20 ps, and the unnecessary soliton has higher propagation velocity and reaches sooner than the fundamental soliton. Accordingly, it is found that the unnecessary soliton and the fundamental soliton are temporally separated from each other sufficiently for practical use. As shown in FIG. 8B and FIG. 8C, it is found that the other fundamental solitons are also temporally separated from the unnecessary soliton sufficiently for practical use.

### [Regarding Control of Center Wavelength of Optical Soliton Pulse and Time Delay Amount]

In addition, by use of the relations shown in FIG. 7 and FIG. 10, the relation between the PCF excitation light power and the time delay amount can be calculated. Thus, the relation between the control of the light intensity modulator 123 (that is, the control of incident intensity of laser pulsed light incident on PCF) and the moving amount of the linearly moving stage that controls the time delay amount in the time delaying circuit 105 can be prepared as a comparison table such as a lookup table.

FIG. 11 shows the graph of the relation between the PCF excitation power (output after passing through the light intensity modulator 123) and the time delay amount, and Table 1 below shows an example of the comparison table. By storing such a graph and comparative table as databases in the storage unit 159 of the arithmetic processing device 111, the measurement control unit 151 can control the light intensity modulator 123 and the time delaying circuit 105.

Alternatively, the comparison table between the PCF excitation power and the time delay amount may be expressed by, instead of a numerical table as shown in Table 1, a function model, such as polynomial approximation, of the relation between PCF excitation power (output after passing through the light modulator) and the time delay amount. In the state where such a function model is stored in the storage unit 159, the measurement control unit 151 may perform numerical operation on the basis of the function model and the linearly moving stage of the actual light intensity modulator 123 and the time delaying circuit 105 may be controlled via the A/D converter or the like.

Further, the measurement control unit 151 not only performs model calculation based on a functional model, but also may control the PCF excitation power and the time delay amount by use of a known model calculation related to the propagation velocity of light in the non-linear optical fiber, for example.
[Table 1]

**Table 1 Lookup Table for Control**

| PCF Incident Power [mW] | Optical Soliton Center Wavelength [nm] | Time Delay Amount [ps] |
|---|---|---|
| 5 | 808.9 | 2.3 |
| 10 | 836.3 | 5.7 |
| 15 | 860.5 | 9.6 |
| 20 | 882.0 | 13.5 |
| 25 | 901.3 | 17.3 |
| 30 | 918.7 | 21.0 |
| 35 | 934.7 | 24.5 |
| 40 | 949.8 | 27.9 |
| 45 | 964.3 | 31.2 |
| 50 | 978.7 | 34.6 |
| 55 | 993.4 | 37.9 |
| 60 | 1009.0 | 41.4 |
| 65 | 1025.7 | 45.1 |
| 70 | 1044.0 | 49.0 |
| 75 | 1064.5 | 53.0 |
| 80 | 1087.4 | 57.1 |

The measuring apparatus 10 according to the present embodiment has been specifically described above with reference to FIG. 5 to FIG. 11.

### (Regarding Hardware Configuration)

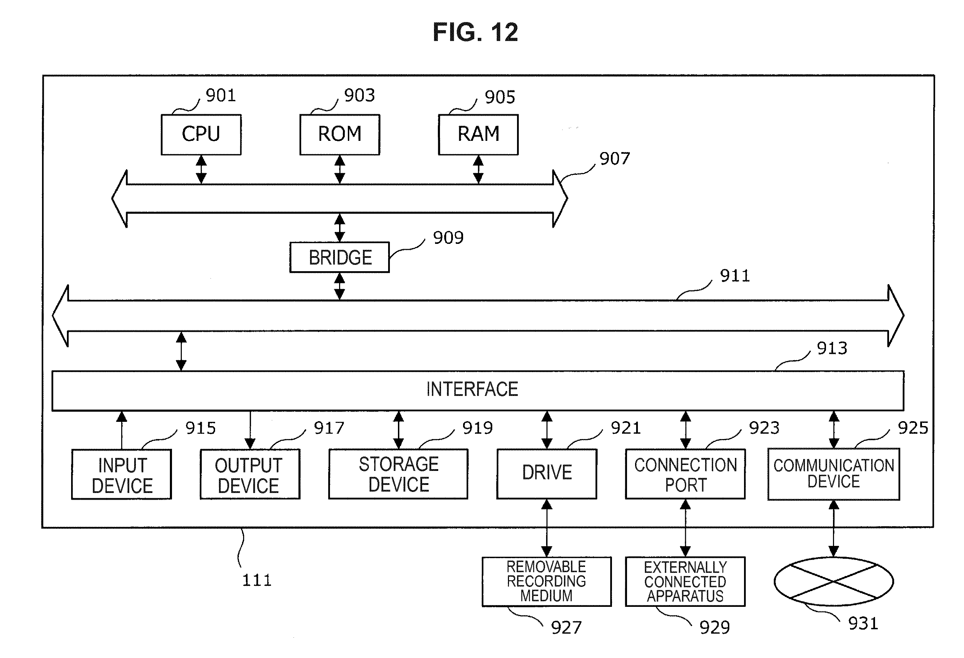

Next, the hardware configuration of the arithmetic processing device 111 according to an embodiment of the present disclosure will be described in detail with reference to FIG. 12. FIG. 12 is a block diagram for illustrating the hardware configuration of the arithmetic processing device 111 according to an embodiment of the present disclosure.

The arithmetic processing device 111 mainly includes a CPU 901, a ROM 903, and a RAM 905. Furthermore, the arithmetic processing device 111 also includes a host bus 907, a bridge 909, an external bus 911, an interface 913, an input device 915, an output device 917, a storage device 919, a drive 921, a connection port 923, and a communication device 925.

The CPU 901 serves as an arithmetic processing device and a control device, and controls the overall operation or a part of the operation of the arithmetic processing device 111 in accordance with various programs recorded in the ROM 903, the RAM 905, the storage device 919, or a removable recording medium 927. The ROM 903 stores programs, operation parameters, and the like used by the CPU 901. The RAM 905 primarily stores programs that the CPU 901 uses and parameters and the like varying as appropriate during the execution of the programs. These are connected with each other via the host bus 907 configured from an internal bus such as a CPU bus or the like.

The host bus 907 is connected to the external bus 911 such as a PCI (Peripheral Component Interconnect/Interface) bus via the bridge 909.

The input device 915 is an operation means operated by a user, such as a mouse, a keyboard, a touch panel, buttons, a switch, and a lever. Also, the input device 915 may be a remote control means (a so-called remote control) using, for example, infrared light or other radio waves, or may be an externally connected apparatus 929 such as a mobile phone or a PDA conforming to the operation of the arithmetic processing device 111. Furthermore, the input device 915 generates an input signal based on, for example, information which is inputted by a user with the above operation means, and is configured from an input control circuit for outputting the input signal to the CPU 901. The user of the arithmetic processing device 111 can input various data to the arithmetic processing device 111 and can instruct the arithmetic processing device 111 to perform processing by operating this input apparatus 915.

The output device 917 is configured from a device capable of visually or audibly notifying acquired information to a user. Examples of such device include display devices such as a CRT display device, a liquid crystal display device, a plasma display device, an EL display device, and lamps, audio output devices such as a speaker and a headphone, a printer, a mobile phone, a facsimile machine, and the like. For example, the output device 917 outputs a result obtained by various kinds of processing performed by the arithmetic processing device 111. More specifically, the display device displays, in the form of texts or images, a result obtained by various kinds of processing performed by the arithmetic processing device 111. On the other hand, the audio output device converts an audio signal such as reproduced audio data and sound data into an analog signal, and outputs the analog signal.

The storage device 919 is a device for storing data configured as an example of a storage unit of the arithmetic processing device 111. The storage device 919 is configured from, for example, a magnetic storage unit device such as a HDD (Hard Disk Drive), a semiconductor storage device, an optical storage device, or a magneto-optical storage device. This storage device 919 stores programs to be executed by the CPU 901, various data, and various data obtained from the outside.

The drive 921 is a reader/writer for recording medium, and is embedded in the arithmetic processing device 111 or attached externally thereto. The drive 921 reads information recorded in the attached removable recording medium 927 such as a magnetic disk, an optical disc, a magneto-optical disk, or a semiconductor memory, and outputs the read information to the RAM 905. Furthermore, the drive 921 can write records in the attached removable recording medium 927 such as a magnetic disk, an optical disc, a magneto-optical disk, or a semiconductor memory. The removable recording medium 927 is, for example, a DVD medium, an HD-DVD medium, or a Blu-ray (registered trademark) medium. The removable recording medium 927 may be a CompactFlash (CF; registered trademark), a flash memory, an SD memory card (Secure Digital memory card), or the like. Alternatively, the removable recording medium 927 may be, for example, an IC card (Integrated Circuit card) equipped with a non-contact IC chip or an electronic appliance.

The connection port 923 is a port for allowing devices to directly connect to the arithmetic processing device 111. Examples of the connection port 923 include a USB (Universal Serial Bus) port, an IEEE1394 port, a SCSI (Small Computer System Interface) port, and the like. Other examples of the connection port 923 include an RS-232C port, an optical audio terminal, an HDMI (High-Definition Multimedia Interface; registered trademark) port, and the like. By the externally connected apparatus 929 connecting to this connection port 923, the arithmetic processing device 111 directly obtains various data from the externally connected apparatus 929 and provides various data to the externally connected apparatus 929.

The communication device 925 is a communication interface configured from, for example, a communication device for connecting to a communication network 931. The communication device 925 is, for example, a wired or wireless LAN (Local Area Network), Bluetooth (registered trademark), a communication card for WUSB (Wireless USB), or the like. Alternatively, the communication device 925 may be a router for optical communication, a router for ADSL (Asymmetric Digital Subscriber Line), a modem for various communications, or the like. This communication device 925 can transmit and receive signals and the like in accordance with a predetermined protocol such as TCP/IP on the Internet and with other communication devices, for example. The communication network 931 connected to the communication device 925 is configured from a network and the like, which is connected via wire or wirelessly, and may be, for example, the Internet, a home LAN, infrared communication, radio wave communication, satellite communication, or the like.

Heretofore, an example of the hardware configuration capable of realizing the functions of the arithmetic processing device 111 according to an embodiment of the present disclosure has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present embodiment.

### (Conclusion)

As described above, according to an embodiment of the present disclosure, without use of an expensive polychromator, high-sensitivity CCD, or the like, by a configuration of a compact, inexpensive fiber-type ultrashort pulsed laser light source, an inexpensive avalanche photodiode, or a photomultiplier tube, it becomes possible to achieve FM-CARS spectroscopic measurement with a high sensitivity from which a non-resonant background is eliminated while maintaining high performance.

In addition, according to an embodiment of the present disclosure, by changing measurement control software in the same apparatus configuration, it becomes possible to switch easily and instantaneously between the FM-CARS spectral spectrum measurement and imaging acquiring of an image contrast with a specific spectrum or a ratiometry between a plurality of spectral intensities or the like. Accordingly, it is possible to achieve a measuring apparatus with few wastes in the apparatus configuration.

Further, by the high-speed rotation-type ND filter shown in FIG. 3A and FIG. 3B, it is possible to achieve an inexpensive, compact light intensity modulator that can achieve wavelength sweeping and light intensity modulation for FM modulation easily at the same time. By use of this high-speed rotation-type ND filter as the light intensity modulator, it becomes possible to minimize the group velocity dispersion of the ultrashort pulse and to prevent the expansion of the pulse width of the Stokes light pulse.

Furthermore, in the measuring apparatus 10 according to an embodiment of the present disclosure, compared with the multiplex-CARS spectroscopic method in which collective spectra measurement of the anti-Stokes light is performed, the incident power of the laser light to the sample can be limited to approximately a half, and thus, a biological sample can be measured with minimal invasion.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

Additionally, the present technology may also be configured as below.
(1) A measuring apparatus including:
   a light source unit configured to emit pulsed laser light used for pump light and Stokes light that excite a predetermined molecular vibration of a measurement sample;
   a Stokes light generating unit configured to modulate an intensity of the pulsed laser light generated by the light source unit with a predetermined reference frequency and to generate Stokes light having a predetermined wavelength using the pulsed laser light having the modulated intensity;
   a time delaying unit configured to delay, by a predetermined time, the pump light using the pulsed laser light generated by the light source unit or the Stokes light generated by the Stokes light generating unit;
   a detecting unit configured to detect, by lock-in detection, transmitted light that has been transmitted through the measurement sample irradiated with the pump light and the Stokes light having a controlled time delay amount, or reflected light from the measurement sample; and
   an arithmetic processing device configured to perform predetermined arithmetic processing on the basis of anti-Stokes light that is detected by lock-in detection by the detecting unit while controlling the intensity modulation in the Stokes light generating unit and the time delay amount in the time delaying unit,
   wherein the Stokes light generating unit transmits the pulsed laser light having the modulated intensity through a non-linear optical fiber to generate and set, as the Stokes light, an optical soliton pulse having a wavelength corresponding to the intensity of the pulsed laser light that is to be incident on the non-linear optical fiber, and
   wherein the time delaying unit delays the time of the pump light or the Stokes light in accordance with a center wavelength of the optical soliton pulse.
(2) The measuring apparatus according to (1),
   wherein the arithmetic processing device controls the intensity of the pulsed laser light to be incident on the non-linear optical fiber and the time delay amount on the basis of a model calculation result or a predetermined database.
(3) The measuring apparatus according to (1) or (2),
   wherein the arithmetic processing device changes the intensity of the pulsed laser light to be incident on the non-linear optical fiber to sweep a wavelength of the Stokes light within a predetermined wavelength region.
(4) The measuring apparatus according to (1) or (2),
   wherein the arithmetic processing device fixes the intensity of the pulsed laser light to be incident on the non-linear optical fiber to a predetermined intensity to generate the Stokes light having a predetermined wavelength.
(5) The measuring apparatus according to any one of (1) to (4),
   wherein, in the arithmetic processing device, the Stokes light having two or more wavelengths is set as the Stokes light having a predetermined wavelength, and
   wherein the arithmetic processing device
   calculates an intensity ratio of the anti-Stokes light between two or more mutually different molecular vibration modes in the measurement sample from the Stokes light having two or more wavelengths and the pump light, and
   generates an image contrast image using the calculated intensity ratio.
(6) The measuring apparatus according to any one of (1) to (5),
   wherein the Stokes light generating unit includes a light modulation unit in which a rotation-type neutral density filter for wavelength sweeping including a pattern in which concentration changes continuously and a rotation-type neutral density filter for frequency modulation including a shading pattern for frequency modulation rotate by mutually different numbers of rotation, and in which the neutral density filter for wavelength sweeping and the neutral density filter for frequency modulation are configured continuously.
(7) The measuring apparatus according to any one of (1) to (5),
   wherein the Stokes light generating unit includes a rotation-type neutral density filter that is used for frequency modulation and that includes a shading pattern in which concentration changes continuously.
(8) The measuring apparatus according to any one of (1) to (5),
   wherein the Stokes light generating unit includes an acousto-optic modulator or an electro-optic modulator and performs the intensity modulation with the acousto-optic modulator or the electro-optic modulator, and
   wherein the arithmetic processing device controls the reference frequency to 100 kHz or more.
(9) A measuring method including:
   emitting pulsed laser light used for pump light and Stokes light that excite a predetermined molecular vibration of a measurement sample;
   modulating an intensity of the generated pulsed laser light with a predetermined reference frequency and generating Stokes light having a predetermined wavelength using the pulsed laser light having the modulated intensity;
   delaying, by a predetermined time, the pump light using the generated pulsed laser light or the generated Stokes light;
   detecting, by lock-in detection, transmitted light that has been transmitted through the measurement sample irradiated with the pump light and the Stokes light having a controlled time delay amount, or reflected light from the measurement sample; and
   performing predetermined arithmetic processing on the basis of anti-Stokes light that is detected by lock-in detection by the detecting unit while controlling the intensity modulation when generating the Stokes light and the time delay amount when delaying the time,
   wherein, in generating the Stokes light, by transmitting the pulsed laser light having the modulated intensity through a non-linear optical fiber, an optical soliton pulse having a wavelength corresponding to the intensity of the pulsed laser light that is to be incident on the non-linear optical fiber is generated and set as the Stokes light, and
   wherein the time of the pump light or the Stokes light is delayed in accordance with a center wavelength of the optical soliton pulse.

### Reference Signs List

- 10: measuring apparatus
- 101: ultrashort pulsed laser light source
- 103: Stokes light generating unit
- 105: time delaying circuit
- 107: sample measuring unit
- 109: detecting unit
- 111: arithmetic processing device
- 121: beam splitter
- 123: light intensity modulator
- 125: Stokes light occurring unit
- 127: group velocity dispersion control unit
- 129: dichroic mirror
- 131: short-pass filter
- 133: light detecting unit
- 135: lock-in amplifier
- 137: A/D converter
- 151: measurement control unit
- 153: data acquiring unit
- 155: arithmetic processing unit
- 157: display control unit
- 159: storage unit

## Claims

1. A measuring apparatus comprising:
a light source unit configured to emit pulsed laser light used for pump light and Stokes light that excite a predetermined molecular vibration of a measurement sample;
a Stokes light generating unit configured to modulate an intensity of the pulsed laser light generated by the light source unit with a predetermined reference frequency and to generate Stokes light having a predetermined wavelength using the pulsed laser light having the modulated intensity;
a time delaying unit configured to delay, by a predetermined time, the pump light using the pulsed laser light generated by the light source unit or the Stokes light generated by the Stokes light generating unit;
a detecting unit configured to detect, by lock-in detection, transmitted light that has been transmitted through the measurement sample irradiated with the pump light and the Stokes light having a controlled time delay amount, or reflected light from the measurement sample; and
an arithmetic processing device configured to perform predetermined arithmetic processing on the basis of anti-Stokes light that is detected by lock-in detection by the detecting unit while controlling the intensity modulation in the Stokes light generating unit and the time delay amount in the time delaying unit,
wherein the Stokes light generating unit transmits the pulsed laser light having the modulated intensity through a non-linear optical fiber to generate and set, as the Stokes light, an optical soliton pulse having a wavelength corresponding to the intensity of the pulsed laser light that is to be incident on the non-linear optical fiber, and
wherein the time delaying unit delays the time of the pump light or the Stokes light in accordance with a center wavelength of the optical soliton pulse.

2. The measuring apparatus according to claim 1,
wherein the arithmetic processing device controls the intensity of the pulsed laser light to be incident on the non-linear optical fiber and the time delay amount on the basis of a model calculation result or a predetermined database.

3. The measuring apparatus according to claim 2,
wherein the arithmetic processing device changes the intensity of the pulsed laser light to be incident on the non-linear optical fiber to sweep a wavelength of the Stokes light within a predetermined wavelength region.

4. The measuring apparatus according to claim 2,
wherein the arithmetic processing device fixes the intensity of the pulsed laser light to be incident on the non-linear optical fiber to a predetermined intensity to generate the Stokes light having a predetermined wavelength.

5. The measuring apparatus according to claim 2,
wherein, in the arithmetic processing device, the Stokes light having two or more wavelengths is set as the Stokes light having a predetermined wavelength, and
wherein the arithmetic processing device
calculates an intensity ratio of the anti-Stokes light between two or more mutually different molecular vibration modes in the measurement sample from the Stokes light having two or more wavelengths and the pump light, and
generates an image contrast image using the calculated intensity ratio.

6. The measuring apparatus according to claim 2,
wherein the Stokes light generating unit includes a light modulation unit in which a rotation-type neutral density filter for wavelength sweeping including a pattern in which concentration changes continuously and a rotation-type neutral density filter for frequency modulation including a shading pattern for frequency modulation rotate by mutually different numbers of rotation, and in which the neutral density filter for wavelength sweeping and the neutral density filter for frequency modulation are configured continuously.

7. The measuring apparatus according to claim 2,
wherein the Stokes light generating unit includes a rotation-type neutral density filter that is used for frequency modulation and that includes a shading pattern in which concentration changes continuously.

8. The measuring apparatus according to claim 2,
wherein the Stokes light generating unit includes an acousto-optic modulator or an electro-optic modulator and performs the intensity modulation with the acousto-optic modulator or the electro-optic modulator, and
wherein the arithmetic processing device controls the reference frequency to 100 kHz or more.

9. A measuring method comprising:
emitting pulsed laser light used for pump light and Stokes light that excite a predetermined molecular vibration of a measurement sample;
modulating an intensity of the generated pulsed laser light with a predetermined reference frequency and generating Stokes light having a predetermined wavelength using the pulsed laser light having the modulated intensity;
delaying, by a predetermined time, the pump light using the generated pulsed laser light or the generated Stokes light;
detecting, by lock-in detection, transmitted light that has been transmitted through the measurement sample irradiated with the pump light and the Stokes light having a controlled time delay amount, or reflected light from the measurement sample; and
performing predetermined arithmetic processing on the basis of anti-Stokes light that is detected by lock-in detection by the detecting unit while controlling the intensity modulation when generating the Stokes light and the time delay amount when delaying the time,
wherein, in generating the Stokes light, by transmitting the pulsed laser light having the modulated intensity through a non-linear optical fiber, an optical soliton pulse having a wavelength corresponding to the intensity of the pulsed laser light that is to be incident on the non-linear optical fiber is generated and set as the Stokes light, and
wherein the time of the pump light or the Stokes light is delayed in accordance with a center wavelength of the optical soliton pulse.
